# EUROPEAN PATENT APPLICATION

(11) **EP 1 698 661 A1**
(43) Date of publication of application: **06.09.2006**
(21) Application number: 04820881.3
(22) Date of filing: 02.12.2004
(51) Int. Cl.: C08L 23/16, C08L 101/00, C08F 210/16, C08J 3/24, C08K 5/00

(54) **THERMOPLASTIC ELASTOMER COMPOSITION, METHOD FOR PRODUCING SAME AND FORMED ARTICLE**

(30) Priority: 25.12.2003 JP 2003429171
(71) Applicant: JSR Corporation, Tokyo 104-0045 (JP)
(72) Inventor: KANAE, Kentarou, JSR Corporation, Tokyo 1040045 (JP); TANAKA, Minoru, JSR Corporation, Tokyo 1040045 (JP)
(74) Representative: TBK-Patent
(86) International application number: PCT/JP2004/017946
(87) International publication number: WO 2005/063876

(57) **Abstract**

The invention provides a thermoplastic elastomer composition having mechanical properties equivalent or superior to those of conventional thermoplastic elastomer compositions and having excellent heat resistance and oil resistance and a preparation process thereof, and molded or formed products making use of this thermoplastic elastomer composition.

The thermoplastic elastomer composition according to the present invention contains a thermoplastic resin having a polar group and an ethylene·α-olefin elastomer having a functional group. The ethylene·α-olefin elastomer having the functional group is preferably a random copolymer obtained by copolymerizing ethylene, an α-olefin having 3 to 10 carbon atoms, an unsaturated monomer having the functional group and an optional non-conjugated diene.

## Description

### TECHNICAL FIELD

The present invention relates to a thermoplastic elastomer composition and a preparation process thereof, and molded or formed products making use of this thermoplastic elastomer composition.

### BACKGROUND ART

As thermoplastic elastomer compositions, have heretofore been known those composed of an olefin resin and an ethylene·propylene·diene copolymer rubber (see, for example, Patent Art. 1), those composed of an olefin resin and nitrile rubber (see, for example, Patent Art. 2), those composed of a polyamide resin and nitrile rubber or acrylic rubber (see, for example, Patent Art. 3), and the like.
However, the thermoplastic elastomer compositions composed of the olefin resin and the ethylene·propylene·diene copolymer rubber involve problems on heat resistance and oil resistance. The thermoplastic elastomer compositions composed of the olefin resin and the nitrile rubber have excellent oil resistance, but involve a problem on heat resistance because double bonds are contained. The thermoplastic elastomer compositions composed of the polyamide resin and the nitrile rubber or acrylic rubber have excellent oil resistance and heat resistance, but involve a problem on cold resistance.

Patent Art. 1: Japanese Patent No. 2140072;
Patent Art. 2: Japanese Patent No. 3257089;
Patent Art. 3: Japanese Patent Application Laid-Open No. 349734/1999.

### DISCLOSURE OF THE INVENTION

The present invention has been made on the basis of the foregoing circumstances and has as its object the provision of a thermoplastic elastomer composition having mechanical properties equivalent or superior to those of conventional thermoplastic elastomer compositions and having excellent heat resistance and oil resistance and a preparation process thereof, and molded or formed products making use of this thermoplastic elastomer composition.

A thermoplastic elastomer composition according to the present invention comprises a thermoplastic resin having a polar group and an ethylene·α-olefin elastomer having a functional group.

In the thermoplastic elastomer composition according to the present invention, it may be preferable that the ethylene·α-olefin elastomer having the functional group be a random copolymer obtained by copolymerizing ethylene, an α-olefin having 3 to 10 carbon atoms, an unsaturated monomer having the functional group and an optional non-conjugated diene.
In such a thermoplastic elastomer composition, it may be preferable that the functional group in the unsaturated monomer having the functional group be a carboxylic group, hydroxyl group, epoxy group or sulfonic group.
It may also be preferable that the ethylene·α-olefin elastomer having the functional group be a random copolymer obtained by copolymerizing 35 to 94.99 mol% of ethylene, 5 to 50 mol% of the α-olefin having 3 to 10 carbon atoms, 0.01 to 5 mol% of the unsaturated monomer having the functional group and 0 to 10 mol% of the non-conjugated diene.
It may further be preferable that the unsaturated monomer having the functional group be a functional cyclic compound represented by the following general formula (1):

[Chemical Formula 1] 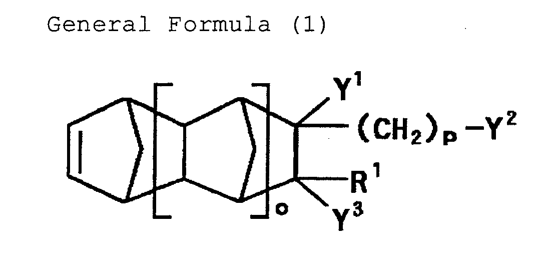 [In the general formula (1), R¹ is a hydrogen atom or a hydrocarbon group having 1 to 10 carbon atoms, Y¹, Y² and Y³ are, independently of one another, a hydrogen atom, a hydrocarbon group having 1 to 10 carbon atoms or -COOH, with the proviso that at least one of Y¹, Y² and Y³ is -COOH, and when at least two of Y¹, Y² and Y³ are -COOH, they may be bonded to each other to form an acid anhydride (-CO-(O)-CO-), o is an integer of 0 to 2, and p is an integer of 0 to 5.]

In the thermoplastic elastomer composition according to the present invention, it may be preferable that the thermoplastic resin having the polar group be at least one resin selected from the group consisting of aminoacrylamide polymers, ethylene·vinyl acetate copolymers, polyethylene oxide, ethylene·acrylic acid copolymers, acrylonitrile· butadiene·styrene terpolymers, acrylonitrile· chlorinated polyethylene·ethylene terpolymers, acrylonitrile·styrene copolymers, acrylonitrile· styrene·acrylate resins, acrylic resins, methacrylic resins, polyamide resins, polycarbonate, vinyl alcohol resins, vinyl acetal resins, methyl methacrylate resins, polyether resins, polyester resins and polyacrylates.

In the thermoplastic elastomer composition according to the present invention, it may be preferable that a proportion of the thermoplastic resin having the polar group to the ethylene·α-olefin elastomer having the functional group be 5:95 to 90:10 in terms of a weight ratio.
In the thermoplastic elastomer composition according to the present invention, a softening agent may be contained in a proportion of 0 to 200 parts by weight per 100 parts by weight of the total of the thermoplastic resin having the polar group and the ethylene·α-olefin elastomer having the functional group.

A preparation process according to the present invention for preparing a thermoplastic elastomer composition is a process for preparing the thermoplastic elastomer composition described above, the process comprising the step of subjecting a thermoplastic resin having a polar group and an ethylene·α-olefin elastomer having a functional group to a dynamic heat treatment in the presence of a crosslinking agent.

A molded or formed product according to the present invention is formed of the thermoplastic elastomer composition described above.

The thermoplastic elastomer compositions according to the present invention have mechanical properties equivalent or superior to those of conventional thermoplastic elastomer compositions and have excellent heat resistance and oil resistance.
According to the preparation process of the present invention, the above-described thermoplastic elastomer compositions can be prepared with advantage.
Since the thermoplastic elastomer compositions according to the present invention have excellent heat resistance and oil resistance, they are useful as materials for interior or exterior surface materials for automotive bumpers, sheathing moldings, window sealing gaskets, door sealing gaskets, trunk sealing gaskets, roof side rails, emblems, inner panels, door trims, console boxes and the like, weatherstrips and the like, seat cushions for automobiles and motor bicycles, leather seats of which mar resistance is required, sealing materials and interior or exterior surface materials for aircrafts and marine vessels, sealing materials, interior or exterior surface materials, waterproofing sheet materials and the like for civil engineering and construction, sealing materials and the like for general machines and apparatus, packings for capacitors and light electric parts, sealants for water storage tanks, sealing materials, surface materials, housings and the like for fuel cell stacks, rolls and cleaning blades for information instruments, films for electronic parts, protecting films in fabrication processes of semiconductors and flat panel displays (FPDs) such as liquid crystal display devices, sealing materials for electronic parts such as hard disk gaskets, protecting films for images such as photographs, decorative films for building materials, medical instrument parts, covering materials for electric wires, general processed products such as daily needs, caps, various kinds of industrial hoses or tubes and belts and sports goods, and the like.

### BEST MODE FOR CARRYING OUT THE INVENTION

The embodiments of the present invention will hereinafter be described in detail.
[Thermoplastic elastomer composition]
The thermoplastic elastomer composition according to the present invention comprises a component (A) composed of a thermoplastic resin having a polarity and a component (B) composed of an ethylene·α-olefin elastomer having a functional group. As the ethylene·α-olefin elastomer having the functional group constituting the component (B), is preferably used a random copolymer (hereinafter referred to as "specific functional group-containing copolymer") obtained by copolymerizing at least ethylene, an α-olefin having 3 to 10 carbon atoms and an unsaturated monomer having the functional group.

In the specific functional group-containing copolymer, ethylene is used as an essential monomer component.
The proportion of ethylene used is preferably 35 to 94.99 mol%, more preferably 40 to 89.99 mol%, particularly preferably 45 to 84.99 mol% based on the whole monomer component.
If the proportion of ethylene used is lower than 35 mol%, it may be difficult in some cases to copolymerize a functional cyclic compound, which will be described subsequently. If the proportion of ethylene used exceeds 94.99 mol% on the other hand, it may be difficult in some cases to achieve rubber elasticity required of the resulting thermoplastic elastomer.

In the specific functional group-containing copolymer, an α-olefin (hereinafter referred to as "specific α-olefin") having 3 to 10 carbon atoms is used as an essential monomer. When the α-olefin having at most 10 carbon atoms is used, the copolymerizability of such an α-olefin with other monomers becomes satisfactory.
As specific examples of the specific α-olefin, may be mentioned propylene, 1-butene, 1-pentene, 4-methylpentene-1, 1-hexene, 1-heptene, 1-octene and 1-decene. Among these, propylene, 1-butene, 1-hexene and 1-octene are preferred, with propylene and 1-butene being more preferred.
These compounds may be used either singly or in any combination thereof.

The proportion of the specific α-olefin used is preferably 5 to 50 mol%, more preferably 10 to 45 mol%, particularly preferably 15 to 40 mol% based on the whole monomer component.
If the proportion of the specific α-olefin used is lower than 5 mol%, it may be difficult in some cases to achieve rubber elasticity required of the resulting thermoplastic elastomer. If the proportion of the specific α-olefin used exceeds 50 mol% on the other hand, the durability of the resulting elastomer may be deteriorated in some cases.

In the specific functional group-containing copolymer, an unsaturated monomer (hereinafter referred to as "functional group-containing unsaturated monomer") having a functional group is used as an essential monomer. This functional group-containing unsaturated monomer preferably has a carboxyl group, hydroxyl group, epoxy group or sulfonic group as the functional group.
As such a functional group-containing unsaturated monomer, is preferably used a functional cyclic compound (hereinafter referred to as "specific functional cyclic compound") represented by the general formula (1).

In the general formula (1) representing the specific functional cyclic compound, R¹ is a hydrogen atom or a hydrocarbon group having 1 to 10 carbon atoms, Y¹, Y² and Y³ are, independently of one another, a hydrogen atom, a hydrocarbon group having 1 to 10 carbon atoms or -COOH, with the proviso that at least one of Y¹, Y² and Y³ is -COOH. When at least two of Y¹, Y² and Y³ are -COOH, they may be bonded to each other to form an acid anhydride (-CO-(O)-CO-).
As specific examples of the hydrocarbon group having 1 to 10 carbon atoms, may be mentioned methyl, ethyl, propyl, butyl, pentyl, hexyl, heptyl, octyl, nonyl and decyl groups.
The repetition number o is an integer of 0 to 2. If the repetition number o is not smaller than 3, it may be difficult in some cases to copolymerize such a cyclic compound with other monomers. The repetition number p is an integer of 0 to 5.

Such a specific functional cyclic compound may be prepared by condensing cyclopentadiene with a functional group-containing unsaturated compound by the Diels-Alder reaction.
As specific examples of the specific functional cyclic compound, may be mentioned
5,6-dimethyl-5,6-dihydroxy-bicyclo[2.2.1]-2-heptene,
5,6-diethyl-5,6-dicarboxy-bicyclo[2.2.1]-2-heptene,
5,6-dimethyl-5,6-bis(carboxymethyl)-bicyclo-[2.2.1]-2-heptene,
5,6-diethyl-5,6-bis(carboxymethyl)-bicyclo-[2.2.1]-2-heptene,
5-methyl-5-carboxy-bicyclo[2.2.1]-2-heptene,
5-ethyl-5-carboxy-bicyclo[2.2.1]-2-heptene,
5-carboxy-5-carboxymethyl-bicyclo[2.2.1]-2-heptene,
5-methyl-5-carboxymethyl-bicyclo[2.2.1]-2-heptene,
5-ethyl-5-carboxymethyl-bicyclo[2.2.1]-2-heptene,
8,9-dimethyl-8,9-dicarboxy-tetracyclo-[4.4.0.1^{2,5}.1^{7,10}]-3-dodecene,
8,9-diethyl-8,9-dicarboxy-tetracyclo-[4.4.0.1^{2,5}.1^{7,10}]-3-dodecene,
8-methyl-8-carboxy-tetracyclo[4.4.0.1^{2,5}.1^{7,10}]-3-dodecene, and
8-ethyl-8-carboxy-tetracyclo[4.4.0.1^{2,5}.1^{7,10}]-3-dodecene.

The proportion of the functional group-containing unsaturated monomer is preferably 0.01 to 5 mol%, more preferably 0.01 to 4 mol based on the whole monomer component.
If the proportion of the functional group-containing unsaturated monomer used is lower than 0.01 mol%, the crosslink density of the resulting ionomer becomes low, and the mechanical strength and heat resistance thereof are liable to lower. If the proportion of the functional group-containing unsaturated monomer used exceeds 5 mol% on the other hand, the crosslink density of the resulting ionomer becomes too high, and so such an ionomer becomes too hard and brittle. It is hence not preferable to use the functional group-containing unsaturated monomer in such a low or high proportion.

In the specific functional group-containing copolymer, a non-conjugated diene may be used as an optional monomer component in addition to the above-described essential monomer components.
As specific examples of this non-conjugated diene, may be mentioned linear acyclic dienes such as 1,4-hexadiene, 1,6-hexadiene and 1,5-hexadiene, branched-chain acyclic dienes such as 5-methyl-1,4-hexadiene, 3,7-dimethyl-1,6-octadiene, 5,7-dimethyl-1,6-octadiene, 3,7-dimethyl-1,7-octadiene, 7-methyl-1,6-octadiene and dihydromyrcene, and alicyclic dienes such as tetrahydroindene, methyltetrahydroindene, dicyclopentadiene, bicyclo[2.2.1]-hept-2,5-diene, 5-methylene-2-norbornene, 5-ethylidene-2-norbornene, 5-propenyl-2-norbornene, 5-isopropylidene-2-norbornene, 5-cyclohexylidene-2-norbornene and 5-vinyl-2-norbornene. These compounds may be used either singly or in any combination thereof. As preferred compounds among the above-mentioned non-conjugated dienes, may be mentioned 1,4-hexadiene, dicyclopentadiene and 5-ethylidene-2-norbornene.
The proportion of the non-conjugated diene used is preferably 0 to 10 mol% based on the whole monomer component. If the proportion of the non-conjugated diene used exceeds 10 mol%, the durability of the resulting ionomer may become low in some cases.

The weight average molecular weight Mw of the specific functional group-containing copolymer is generally 1,000 to 3,000,000, preferably 3,000 to 1,000,000, more preferably 5,000 to 700,000 in terms of polystyrene as measured by gel permeation chromatography (GPC).
The specific functional group-containing copolymer preferably has a melt flow rate (MFR) of 0.01 to 100 g/10 min, more preferably 0.05 to 50 g/10 min as measured under conditions of a temperature of 230°C and a load of 10 kg.
Further, the specific functional group-containing copolymer preferably has a glass transition temperature of -90 to 50°C, particularly -70 to 10°C.
The specific functional group-containing copolymer may be an oil-extended polymer obtained by adding a softening agent upon polymerization.

Such a specific functional group-containing copolymer can be prepared in accordance with any suitable publicly known polymerization process, and no particular limitation is imposed on a specific preparation process. However, the process described in, for example, Japanese Patent Application Laid-Open No. 2001-247629 may be suitably utilized.

The thermoplastic resin constituting the component (A) has a polar group. In the present invention, the thermoplastic resin (hereinafter referred to as "polar group-containing thermoplastic resin") having the polar group may have the polar group in a main chain or side chain of a polymer making up it, or as a substituent group of the main chain or side chain.
As such a polar group-containing thermoplastic resin, may preferably be used an aminoacrylamide polymer, ethylene-vinyl acetate copolymer, polyethylene oxide, ethylene-acrylic acid copolymer, 4-methylpentene-1 resin, acrylonitrile·butadiene· styrene terpolymer, acrylonitrile·chlorinated polypropylene·ethylene terpolymer, acrylonitrile· styrene copolymer, acrylonitrile·styrene·acrylate resin, acrylic resin, methacrylic resin, polyamide resin, polycarbonate, vinyl alcohol resin, vinyl acetal resin, methyl methacrylate resin, polyether resin, polyester resin, polyacrylate resin, polybutylene terephthalate, polyester elastomer, polyamide elastomer, polyurethane elastomer or the like.
Among these, the polyamide resin, polyester resin, polybutylene terephthalate, polyester elastomer, polyamide elastomer and polyurethane elastomer are more preferred.

As the polyamide resin, may be used various publicly known resins. As specific examples thereof, may be mentioned nylon 6 (N6), nylon 66 (N66), nylon 11 (N11), nylon 12 (N12) and aliphatic polyamide (nylon MXD6) having an aromatic ring.
A copolymer of the polyamide resin may also be used. As specific examples thereof, may be mentioned copolymers (N6/N66) of nylon 6 and nylon 66, alternating copolymers (nylon 610:N610) of nylon 6 and nylon 10, and alternating copolymers (nylon 612:N612) of nylon 6 and nylon 12.
These polyamide resins may be used singly or as a blend of two or more thereof. As specific examples of the blend, may be mentioned two-component blends such as blends (N6/N66) of nylon 6 and nylon 66, blends (N6/N11) of nylon 6 and nylon 11, blends (N6/N12) of nylon 6 and nylon 12, blends (N6/N610) of nylon 6 and nylon 610, blends (N6/N612) of nylon 6 and nylon 612, blends (N66/N11) of nylon 66 and nylon 11, blends (N66/N12) of nylon 66 and nylon 12, blends (N66/N610) of nylon 66 and nylon 610, blends (N66/N612) of nylon 66 and nylon 612, blends (N11/N12) of nylon 11 and nylon 12, blends (N11/N610) of nylon 11 and nylon 610, blends (N11/N612) of nylon 11 and nylon 612, blends (N12/N610) of nylon 12 and nylon 610, blends (N12/N612) of nylon 12 and nylon 612 and blends (N610/N612) of nylon 610 and nylon 612, three-component blends such as blends (N6/N11/N610) of nylon 6, nylon 11 and nylon 610, blends (N6/N11/N612) of nylon 6, nylon 11 and nylon 612, blends (N6/N12/N610) of nylon 6, nylon 12 and nylon 610, blends (N6/N12/N612) of nylon 6, nylon 12 and nylon 612, blends (N6/N610/N612) of nylon 6, nylon 610 and nylon 612, blends (N66/N11/N610) of nylon 66, nylon 11 and nylon 610, blends (N66/N11/N612) of nylon 66, nylon 11 and nylon 612, blends (N66/N12/N610) of nylon 66, nylon 12 and nylon 610, blends (N66/N12/N612) of nylon 66, nylon 12 and nylon 612, blends (N66/N610/N612) of nylon 66 and nylon 610 and nylon 612, four-component blends such as blends (N6/N66/N11/N610) of nylon 6, nylon 66, nylon 11 and nylon 610, blends (N6/N66/N11/N612) of nylon 6, nylon 66, nylon 11 and nylon 612, blends (N6/N66/N12/N610) of nylon 6, nylon 66, nylon 12 and nylon 610, blends (N6/N66/N12/N612) of nylon 6, nylon 66, nylon 12 and nylon 612, blends (N6/N66/N610/N612) of nylon 6, nylon 66, nylon 610 and nylon 612, blends (N6/N11/N12/N610) of nylon 6, nylon 11, nylon 12 and nylon 610, blends (N6/N11/N12/N612) of nylon 6, nylon 11, nylon 12 and nylon 612, blends (N6/N11/N610/N612) of nylon 6, nylon 11, nylon 610 and nylon 612 and blends (N6/N12/N610/N610) of nylon 6, nylon 12, nylon 610 and nylon 612, five-component blends such as blends (N6/N66/N11/N610/N612) of nylon 6, nylon 66, nylon 11, nylon 610 and nylon 612 and blends (N6/N66/N12/N610/N612) of nylon 6, nylon 66, nylon 12, nylon 610 and nylon 612, and six-component blends such as blends (N6/N66/N11/N12/N610/N612) of nylon 6, nylon 66, nylon 11, nylon 12, nylon 610 and nylon 612.

In the thermoplastic elastomer composition according to the present invention, a proportion of the component (A) to the component (B) is preferably 5:95 to 90:10, more preferably 10:90 to 80:20 in terms of a weight ratio.
If the proportion of the component (A) is too low, the resulting thermoplastic elastomer composition tends to lower its mechanical strength and oil resistance. If the proportion of the component (B) is too high on the other hand, the resulting thermoplastic elastomer composition tends to lower its rubber elasticity.

A component (C) composed of a softening agent may be contained in the thermoplastic elastomer composition according to the present invention.
As the softening agent consisting the component (C), may be used a petroleum type softening agent such as aromatic oil, naphthenic oil, paraffinic oil, white oil, petrolatum or gilsonite, a vegetable oil such as castor oil, cotton seed oil, rapeseed oil, palm oil, coconut oil or rosin, a phthalate such as dimethyl phthalate, diethyl phthalate, dibutyl phthalate, diisobutyl phthalate, dioctyl phthalate, butyloctyl phthalate, di-(2-ethylhexyl) phthalate, diisooctyl phthalate or diisodecyl phthalate, a fatty acid ester such as dimethyl adipate, diisobutyl adipate, di-(2-ethylhexyl) adipate, diisooctyl adipate, diisodecyl adipate, octyldecyl adipate, di-(2-ethylhexyl) azelate, diisooctyl azelate, diisobutyl azelate, dibutyl sebacate, di-(2-ethylhexyl) sebacate or diisooctyl sebacate, a trimellitate such as isodecyl trimellitate, octyl trimellitate, n-octyl trimellitate or isononyl trimellitate, di-(2-ethylhexyl) fumarate, diethylene glycol monooleate, glycerol monoricinolate, trilauryl phosphate, tristearyl phosphate, tri-(2-ethylhexyl) phosphate, tricresyl phosphate, epoxidated soybean oil, or polyether ester. These softening agents may be used either singly or in any combination thereof.
The softening agent may be added to the polar group-containing thermoplastic resin and/or the ethylene·α-olefin elastomer having the functional group upon preparation of the thermoplastic elastomer composition, may be added to a filler, which will be described subsequently, prior to the preparation of the thermoplastic elastomer composition, may be added upon preparation of the polar group-containing thermoplastic resin, or may be added upon preparation of the ethylene·α-olefin elastomer having the functional group.

The proportion of the component (C) used is preferably at most 200 parts by weight, more preferably at most 180 parts by weight, particularly preferably 150 parts by weight per 100 parts by weight of the total of the component (A) and the component (B).
If the proportion of the softening agent used as the component (C) is too high, there is a tendency that the softening agent bleeds out of the resulting thermoplastic elastomer composition, or the mechanical strength and rubber elasticity of the resulting thermoplastic elastomer composition are lowered.

The thermoplastic elastomer composition according to the present invention may contain a polymeric compound (hereinafter referred to as "another polymeric compound") selected from other thermoplastic resins (hereinafter referred to as "other thermoplastic resins") than the polar group-containing thermoplastic resins, other thermoplastic elastomers (hereinafter referred to as "other thermoplastic elastomers") than the ethylene·α-olefin elastomers having the functional group and rubber within limits not impairing the properties thereof.
Specific examples of the other thermoplastic resins include polyethylene polyisobutylene, polypropylene, atactic poly-1-butene homopolymer, α-olefin copolymer resins (for example, copolymers of propylene with other α-olefin(s) such as ethylene, 1-butene, 1-pentene, 1-hexene, 4-methyl-1-pentene, 1-octene and/or 1-decene, containing at least 50 mol% of a structural unit derived from propylene; and copolymers of 1-butene with ethylene or propylene and other α-olefin(s) such as 1-pentene, 1-hexene, 4-methyl-1-pentene, 1-octene and/or 1-decene, containing at least 50 mol% of a structural unit derived from 1-butene), polyisobutylene, 4-methyl-1-pentene resins and polystyrene.
Specific examples of the other thermoplastic elastomers and rubber include ethylene·α-olefin copolymer rubbers, ethylene·α-olefin·non-conjugated diene terpolymer rubbers, maleic anhydride-grafted polymers of hydrogenated products of styrene· butadiene rubber, butadiene rubber and hydrogenated products thereof, maleic anhydride-grafted polymers of hydrogenated products of butadiene rubber, polyisobutylene·isoprene copolymers, isoprene rubber and hydrogenated products thereof, maleic anhydride-grafted polymers of hydrogenated products of isoprene rubber, styrene-isoprene rubber and hydrogenated products thereof, maleic anhydride-grafted polymers of hydrogenated products of styrene-isoprene rubber, nitrile rubber and hydrogenated products thereof, acrylic rubber, silicone rubber, fluorine-containing rubber, butyl rubber, natural rubber, chlorinated polyethylene thermoplastic elastomers, syndiotactic 1,2-polybutadiene, hydrogenated styrene-butadiene random copolymers, hydrogenated isoprene-styrene random copolymers, hydrogenated styrene-butadiene block copolymers, hydrogenated styrene-isoprene block copolymers, hydrogenated styrene-butadiene-isoprene block terpolymers, hydrogenated butadiene block copolymers, simple blend type olefin thermoplastic elastomers, in-plant type olefin thermoplastic elastomers, dynamic crosslink type olefin thermoplastic elastomers, polyvinyl chloride type thermoplastic elastomers, polyurethane type thermoplastic elastomers, polyester type thermoplastic elastomers, polyamide type thermoplastic elastomers, and fluorine-containing thermoplastic elastomers.
These other polymeric compounds may be used either singly or in any combination thereof.

Into the thermoplastic elastomer composition according to the present invention, may be contained various kinds of additives.
As the additives and fillers, may be used antioxidants, antistatic agents, blocking agents, sealing property improvers, lubricants, anti-aging agents, stabilizers such as heat stabilizers, weathering agents, metal inactivators, ultraviolet absorbents, light stabilizers and copper inhibitors, antiseptic and mildewproofing agents, dispersing agents, plasticizers, nucleating agents, flame retardants, tackifiers, foaming aids, pigments and colorants such as titanium oxide and carbon black, fillers, such as metal powders such as ferrite, inorganic fibers such as glass fibers and metal fibers, organic fibers such as carbon fiber and aramide fiber, composite fibers, inorganic whiskers such as potassium titanate whisker, glass beads, glass balloons, glass flakes, asbestos, mica, calcium carbonate, talc, set silica, dry silica, alumina, alumina silica, calcium silicate, hydrotalcite, kaolin, diatomaceous earth, graphite, pumice, ebonite powder, cotton flock, cork powder, barium sulfate, fluorocarbon resins, and polymer beads, and mixtures thereof, cellulose powder, rubber powder, wood powder, polyolefin waxes, low-molecular weight polymers, and/or the like.

As a method for preparing the thermoplastic elastomer composition according to the present invention, may be used a method, in which the polar group-containing thermoplastic resin that is the component (A), the ethylene·α-olefin elastomer having the functional group that is the component (B), the softening agent that is the component (C) used as needed, and the other components are melted and kneaded, or a method, in which the polar group-containing thermoplastic resin that is the component (A), the ethylene·α-olefin elastomer having the functional group that is the component (B), the softening agent that is the component (C) used as needed, and the other components are subjected to a dynamic heat treatment in the presence of a crosslinking agent. According to the former method, a thermoplastic elastomer composition, which is not dynamically crosslinked, can be obtained. According to the latter method, which is dynamically crosslinked, can be obtained. In the present invention, the dynamically crosslinked thermoplastic elastomer composition is preferred. The dynamic heat treatment may be conducted while kneading the polar group-containing thermoplastic resin that is the component (A), the ethylene·α-olefin elastomer having the functional group that is the component (B), the softening agent that is the component (C) used as needed, and the other components. However, the treatment may also be conducted to a kneaded product obtained by kneading these components.
Examples of crosslinking agents usable include organic peroxides, phenol resin crosslinking agents, sulfur, sulfur compounds, p-quinone, p-quinone dioxime derivatives, bismaleimide compounds, epoxy compounds, silane compounds, amino resins, polyol crosslinking agents, polyamines, triazine compounds and metal soap. The organic peroxides and phenol resin crosslinking agents are particularly preferred.

Specific examples of the organic peroxides include 1,3-bis(t-butylperoxyisopropyl)benzene, 2,5-dimethyl-2,5-bis(t-butylperoxy)hexyne-3, 2,5-dimethyl-2,5-bis(t-butylperoxy)hexene-3, 2,5-dimethyl-2,5-bis(t-butylperoxy)hexane, 2,2'-bis(t-butylperoxy)-p-isopropylbenzene, dicumyl peroxide, di-t-butyl peroxide, t-butyl peroxide, p-menthane peroxide, 1,1-bis(t-butylperoxy)-3,3,5-trimethylcyclohexane, dilauroyl peroxide, diacetyl peroxide, t-butyl peroxybenzoate, 2,4-dichlorobenzoyl peroxide, p-chlorobenzoyl peroxide, benzoyl peroxide, di(t-butylperoxy) perbenzoate, n-butyl-4,4-bis(t-butylperoxy) valerate and t-butylperoxyisopropyl carbonate. Among these, those relatively high in decomposition temperature, such as 1,3-bis(t-butylperoxyisopropyl)benzene, 2,5-dimethyl-2,5-bis(t-butylperoxy)hexyne-3 and 2,5-dimethyl-2,5-bis(t-butylperoxy)hexane, are preferred.
These organic peroxides may be used either singly or in any combination thereof.

When the organic peroxide is used as the crosslinking agent, a crosslinking aid may be used in combination to moderately conduct a crosslinking reaction, and particularly even crosslinking may be formed.
As specific examples of such a crosslinking aid, may be mentioned sulfur or sulfur compounds such as powdery sulfur, colloidal sulfur, precipitated sulfur, insoluble sulfur, surface-treated sulfur and dipentamethylenethiuram tetrasulfide; oxime compounds such as p-quinone oxime and p,p'-dibenzoylquinone oxime; polyfunctional monomers such as ethylene glycol di(meth)acrylate, diethylene glycol di(meth)-acrylate, triethylene glycol di(meth)acrylate, tetraethylene glycol di(meth)acrylate, 1,4-butanediol di(meth)acrylate, 1,6-hexanediol di(meth)acrylate, 1,9-nonanediol di(meth)acrylate, glycerol di(meth)acrylate, polyethylene glycol (PEG #200) di(meth)acrylate, polyethylene glycol (PEG #400) di(meth)acrylate, polyethylene glycol (PEG #600) di(meth)acrylate, trimethylolpropane tri(meth)acrylate, pentaerythritol tri(meth)acrylate, dipentaerythritol hexa(meth)acrylate, neopentyl glycol di(meth)acrylate, diallyl phthalate, tetraallyloxyethane, triallyl isocyanurate, N,N'-m-phenylenebismaleimide, N,N'-toluylenebismaleimide, maleic anhydride, divinylbenzene, 2,4,6-trimercapto-S-triazine and isocyanuric acid, and metal compounds such as zinc methacrylate, magnesium methacrylate, zinc dimethacrylate and magnesium dimethacrylate. Among these, p,p'-dibenzoylquinone oxime, N,N'-m-phenylenebismaleimide, trimethylolpropane tri(meth)acrylate and divinylbenzene are preferred.
These compounds may be used either singly or in any combination thereof. Of these compounds, N,N'-m-phenylenebismaleimide has an action as a crosslinking agent, and so it may also be used as the crosslinking agent.

When the organic peroxide is used as the crosslinking agent, its amount used is preferably 0.05 to 10 parts by weight, more preferably 0.1 to 5 parts by weight per 100 parts by weight of the total of the component (A) and the component (B). If the amount of the organic peroxide used is less than 0.05 part by weight, the crosslinking degree of the resulting thermoplastic elastomer composition becomes low, so that it may be difficult in some cases to achieve the desired rubber elasticity and mechanical strength. If the amount of the organic peroxide used exceeds 10 parts by weight on the other hand, the crosslinking degree of the resulting thermoplastic elastomer composition becomes too high, and so such a thermoplastic elastomer composition tends to lower its molding or forming and processing ability or mechanical properties.
When the organic peroxide is used as the crosslinking agent, the amount of the crosslinking aid used is preferably at most 10 parts by weight, more preferably 0.2 to 5 parts by weight per 100 parts by weight of the total of the component (A) and the component (B). If the amount of the crosslinking aid used exceeds 10 parts by weight, the crosslinking degree of the resulting thermoplastic elastomer composition becomes too high, and so such a thermoplastic elastomer composition tends to lower its molding or forming and processing ability or mechanical properties.

Examples of phenolic crosslinking agents usable include p-substituted phenolic compounds represented by the following formula (2), o-substituted phenol-aldehyde condensates, m-substituted phenol-aldehyde condensates and brominated alkylphenol-aldehyde condensates. Among these, the p-substituted phenolic compounds are preferred. Such a p-substituted phenolic compound is obtained by a condensation reaction of a p-substituted phenol with aldehyde (preferably, formaldehyde) in the presence of an alkali catalyst.

[Chemical Formula 2]

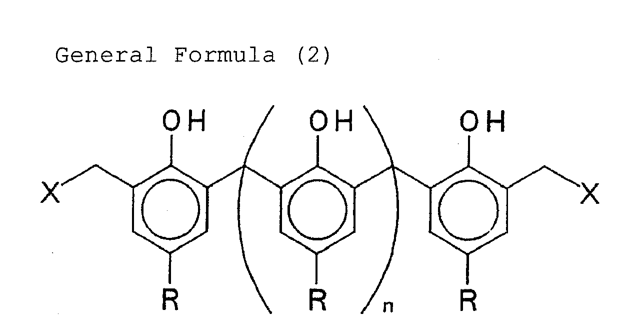

[In the general formula (2), n is an integer of 0 to 10, X groups are, independently of each other, a hydroxyl group, halogenated alkyl group or halogen atom, and R groups are, independently of each other, a saturated hydrocarbon group having 1 to 15 carbon atoms.]

When the phenolic crosslinking agent is used as the crosslinking agent, the phenolic crosslinking agent may be used singly. However, a crosslinking accelerator may also be used in combination for the purpose of controlling a crosslinking speed. As the crosslinking accelerator, may be used a metal halide such as stannous chloride or ferric chloride, an organic halide such as chlorinated polypropylene, butyl bromide rubber or chloroprene rubber, or the like. Besides the crosslinking accelerator, a dispersing agent, such as a metal oxide such as zinc oxide, or stearic acid is more preferably used in combination.

When the phenolic crosslinking agent is used as the crosslinking agent, its amount used is preferably 0.2 to 10 parts by weight, more preferably 0.5 to 5 parts by weight per 100 parts by weight of the total of the component (A) and the component (B). If the amount of the phenolic crosslinking agent used is less than 0.2 part by weight, the crosslinking degree of the resulting thermoplastic elastomer composition becomes low, so that it may be difficult in some cases to achieve the desired rubber elasticity and mechanical strength. If the amount of the phenolic crosslinking agent used exceeds 10 parts by weight on the other hand, the crosslinking degree of the resulting thermoplastic elastomer composition becomes too high, and so such a thermoplastic elastomer composition tends to lower its molding or forming and processing ability or mechanical properties.

The dynamic heat treatment may be conducted by means of, for example, a melt kneader generally used for preparing or processing a resin or elastomer. In the present invention, the term "dynamic heat treatment" means a treatment that both of a shearing force-applying treatment and a heat treatment are conducted.
The melt kneader may be any of the batch type and the continuous type. As specific examples of the melt kneader, may be mentioned batch type melt kneaders such as an open type mixing roll, and non-open type Banbury mixer and pressure kneader, and continuous type melt kneaders such as a single-screw extruder, a same-direction rotating type continuous twin-screw extruder, an opposite-direction rotating type continuous twin-screw extruder and a twin-screw kneader. Among these, the continuous type extruders are preferably used from the viewpoints of profitability, treatment efficiency and the like.

No particular limitation is imposed on the continuous type extruder used in the dynamic heat treatment so far as it can melt and knead the respective components, and various kinds of extruders may be used. When a twin-screw extruder is selected, however, it is preferable to use an extruder that a ratio L/D of an effective screw length L to a screw outer diameter D is at least 20. The ratio is more preferably at least 30, particularly preferably 36 to 80. As the twin-screw extruder, may be used those of various ways, for example, those that two screws intermesh with each other, and those that two screws do not intermesh. However, an extruder that is a same-direction rotating type continuous twin-screw extruder, the two screws of which rotate in the same direction and intermesh, is more preferred.
Examples of such a twin-screw extruder include "PCM" manufactured by Ikegai K.K., "KTX" manufactured by Kobe Steel, Ltd., "TEX" manufactured by The Japan Steel Works, Ltd., "TEM" manufactured by Toshiba Machine Co., Ltd., and "ZSK" manufactured by Warner Co.
When the twin-screw kneader is selected, it is preferable to use a kneader that a ratio L/D of an effective screw length L to a screw outer diameter D is at least 5. The ratio is more preferably at least 10. As the twin-screw kneader, may be used those of various ways, for example, those that two screws intermesh with each other, and those that two screws do not intermesh. However, a kneader that is an opposite-direction rotating type, the two screws of which rotate in opposite directions to each other and intermesh, is more preferred. The kneading part of the twin-screw kneader is preferably in the form of a rotor rather than a kneading disk.
Examples of such a twin-screw kneader include "Mixtron KTX", "Mixtron LCM" and "Mixtron NCM" manufactured by Kobe Steel, Ltd., and "CIM" and "CMP" manufactured by The Japan Steel Works, Ltd.
In the dynamic heat treatment, 2 or more of the above-described continuous type extruders may also be joined to be used. For example, an opposite-direction rotating twin-screw kneader as the first continuous type extruder and a same-direction rotating twin-screw extruder as the second continuous type extruder may be used in combination.

The specific treatment conditions of the dynamic heat treatment varies according to the kinds of the resin and elastomer used, the kind of the melt kneader used, and the like. However, the treatment temperature is preferably 120 to 350°C, more preferably 150 to 290°C, and the treatment time is preferably 20 seconds to 120 minutes, more preferably 30 seconds to 30 minutes. The shearing force applied to the mixture is preferably 10 to 20,000/sec, more preferably 100 to 10,000/sec in terms of a shear rate.

Since the thermoplastic elastomer composition according to the present invention obtained in such a manner has a durometer A hardness of, for example, 10 to 99, preferably 20 to 95 and tensile strength at break of, for example, at least 1.0 MPa, preferably at least 3.0 MPa, it has the same mechanical properties as those of the conventional thermoplastic elastomer compositions, and moreover is excellent in heat resistance and oil resistance as apparent from Examples which will be described subsequently.

### [Molded or formed product]

The molded or formed product according to the present invention can be produced by molding or forming the thermoplastic elastomer composition described above. However, the preparation step of the thermoplastic elastomer composition and a molding or forming step may be conducted in a single process, thereby directly producing the molded or formed product from the component (A), the component (B) and the other components used as needed, which make up the thermoplastic elastomer composition.
No particular limitation is imposed on the method of molding or forming the thermoplastic elastomer composition, and conventionally known forming or molding methods, for example, extrusion, calendaring, solvent casting, injection molding, vacuum forming, powder slush molding and hot pressing may be suitably utilized.

The molded or formed products according to the present invention may also be those laminated on or bonded to rubber, plastics, thermoplastic elastomers, other thermoplastic elastomer compositions than the thermoplastic elastomer compositions according to the present invention, glass, metals, fabrics, wood or the like.
Examples of the rubber include ethylene·α-olefin copolymer rubbers and maleic anhydride-grafted polymers thereof, ethylene·α-olefin·non-conjugated diene copolymer rubbers, styrene·butadiene rubber, nickel-catalyzed polymerization butadiene rubber, isoprene rubber, nitrile rubber and hydrogenated products thereof, acrylic rubber, silicone rubber, fluorine-containing rubber, butyl rubber, and natural rubber.
Examples of the plastics include ionomers, aminoacrylamide polymers, polyethylene and maleic anhydride-grafted polymers thereof, polyisobutylene, ethylene-vinyl chloride polymers, ethylene-vinyl alcohol polymers, ethylene-vinyl acetate copolymers, polyethylene oxide, ethylene-acrylic acid copolymers, polypropylene and maleic anhydride-grafted polymers thereof, polyisobutylene and maleic anhydride-grafted polymers thereof, chlorinated polypropylene, 4-methylpentene-1 resins, polystyrene, ABS resins, ACS resins, AS resins, AES resins, ASA resins, MBS resins, acrylic resins, methacrylic resins, vinyl chloride resins, vinylidene chloride resins, polyamide resins, polycarbonate, acrylic resins, methacrylic resins, vinyl chloride resins, vinylidene chloride resins, polycarbonate, acrylic resins, methacrylic resins, vinyl chloride resins, vinylidene chloride resins, vinyl alcohol resins, vinyl acetal resins, methyl methacrylate resins, fluorocarbon resins, polyether resins, polyethylene terephthalate, polyacrylates, polyamide resins, polyurethane, polyimide, polyurea resins, epoxy resins, phenol resins, urea resins, polybutene-1, methylpentane resins, and polyacrylonitrile.
Examples of the thermoplastic elastomers include chlorinated polyethylene type thermoplastic elastomers, syndiotactic 1,2-polybutadiene, simple blend type olefin thermoplastic elastomers, in-plant type olefin thermoplastic elastomers, dynamic crosslink type olefin thermoplastic elastomers, polyvinyl chloride type thermoplastic elastomers, polyurethane type thermoplastic elastomers, polyester type thermoplastic elastomers, polyamide type thermoplastic elastomers, fluorine-containing thermoplastic elastomers, hydrogenated products of styrene-butadiene rubber, maleic anhydride-grafted polymers of hydrogenated products of styrene· butadiene rubber, hydrogenated products of isoprene rubber, maleic anhydride-grafted polymers of hydrogenated products of isoprene rubber, hydrogenated products of styrene·isoprene rubber, maleic anhydride-grafted polymers of hydrogenated products of styrene-isoprene rubber, hydrogenated products of styrene-butadiene block copolymers, and hydrogenated products of styrene·isoprene block copolymers.
Examples of the metals include stainless steel, aluminum, iron, copper, nickel, zinc, lead, tin, and alloys used in automobiles, ships and household electric appliances, such as nickel-zinc alloys, iron-zinc alloys and lead-tin alloys.

Since the molded or formed products according to the present invention have excellent heat resistance and oil resistance, they are useful as materials for interior or exterior surface materials for automotive bumpers, sheathing moldings, window sealing gaskets, door sealing gaskets, trunk sealing gaskets, roof side rails, emblems, inner panels, door trims, console boxes and the like, weatherstrips and the like, seat cushions for automobiles and motor bicycles, leather seats of which mar resistance is required, sealing materials and interior or exterior surface materials for aircrafts and marine vessels, sealing materials, interior or exterior surface materials, waterproofing sheet materials and the like for civil engineering and construction, sealing materials and the like for general machines and apparatus, packings for capacitors and light electric parts, sealants for water storage tanks, sealing materials, surface materials, housings and the like for fuel cell stacks, rolls and cleaning blades for information instruments, films for electronic parts, protecting films in fabrication processes of semiconductors and flat panel displays (FPDs) such as liquid crystal display devices, sealing materials for electronic parts such as hard disk gaskets, protecting films for images such as photographs, decorative films for building materials, medical instrument parts, covering materials for electric wires, general processed products such as daily needs, caps, various kinds of industrial hoses or tubes and belts and sports goods, and the like.

### EXAMPLES

The present invention will hereinafter be described specifically by the following Examples. However, the present invention is not limited thereto.
Various components used in the following examples and comparative examples are as follows:

[Polar group-containing thermoplastic resin]
Polyamide resin (A-1): Nylon 12 (product of Ube Industries Co., Ltd., trade name "Nylon 3035U")

### [Ethylene·α-olefin elastomer having functional group]

(1) Specific functional group-containing copolymer (B-1) :
   A specific functional group-containing copolymer in which the content of the structural unit derived from ethylene is 73.7 mol%, the content of the structural unit derived from propylene is 24.6 mol%, the content of the structural unit derived from 5-ethylidene-2-norbornene is 1.4 mol%, and the content of the structural unit derived from 8-methyl-8-carboxy-tetracyclo[4.4.0,1^{2,5}.1^{7,10}]-3-dodecene is 0.3 mol%, and the weight average molecular weight
      (Mw) is 15.6 × 10⁴.
(2) Specific functional group-containing copolymer (B-2) :
   A specific functional group-containing copolymer in which the content of the structural unit derived from ethylene is 77.4 mol%, the content of the structural unit derived from propylene is 21.8 mol%, the content of the structural unit derived from 5-ethylidene-2-norbornene is 0 mol%, and the content of the structural unit derived from 5-methyl-5-carboxy-bicyclo[2.2.1]-2-heptene is 0.8 mol%, and the weight average molecular weight (Mw) is 13.1 x 10⁴.

### [Other polymeric compound]

(1) Polymeric compound (D-1): Ethylene-propylene-5-ethylidenenorbornene terpolymer rubber (oil-extended rubber, in which the content of the structural unit derived from ethylene is 79 mol%, the content of the structural unit derived from propylene is 21 mol%, the iodine value is 15, and paraffinic oil is contained in a proportion of 43% by mass; product of JSR Corporation, trade name "EP98A")
(2) Polymeric compound (D-2): Crystalline polypropylene (product of Nippon Polychem Co., Ltd.; trade name "MA4")

### [Other additive]

Anti-aging agent (E-1): 4,4'-bis(α,α-dimethylbenzyl)diphenylamine (product of Ouchi-Shinko Chemical Industrial Co., Ltd., trade name "NOCRAC CD").
Crosslinking agent (F-1): 2,5-dimethyl-2,5-(t-butylperoxy)hexane (product of Nippon Oil & Fats Co., Ltd.; trade name "Perhexa 25B-40").
Auxiliary crosslinking agent (f-1):
Divinylbenzene (product of Sankyo Chemical, Ltd., trade name "Divinylbenzene Purity 55%").

### <Example 1>

A 10-L double arm type pressure kneader (manufactured by MORIYAMA COMPANY LTD.) heated to 230°C was charged with 30 parts by weight of the polyamide resin (A-1), 70 parts by weight of the specific functional group-containing copolymer (B-1) and 0.5 part by weight of the anti-aging agent (E-1), and the contents were kneaded (at a shear rate of 200 s⁻¹) for 20 minutes at 40 rpm. The resultant kneaded mass in a molten state was then pelletized by a feeder ruder (manufactured by MORIYAMA COMPANY LTD.) set at 180°C and 40 rpm to obtain a kneaded product pelletized. To 100.5 parts by weight of the thus-obtained pellets of the kneaded product, were added 1 part by weight of the crosslinking agent (F-1) and 1.25 parts by weight of the crosslinking aid (f-1), the contents were mixed for 30 seconds by means of a Henschel mixer (manufacture by Mitsui Mining Co., Ltd.), and the resultant mixture was subjected to a dynamic heat treatment by means of a same-direction rotating type continuous twin screw extruder (manufactured by Ikegai K.K., Model "PCM-45"; an extruder that 2 screws intermesh with each other, a ratio L/D of the length (effective length) L of a screw flight part to the diameter D of each screw is 33.5) under conditions that the temperature of the cylinder was 230°C, the number or revolutions of the screws was 300 rpm, the shear rate was 400 sec⁻¹, and the residence time in the cylinder was 90 seconds to pelletize it, thereby obtaining pellets of a dynamically crosslinked thermoplastic elastomer composition.
The resultant pellets of the thermoplastic elastomer composition were injection-molded by means of an injection molding machine (manufactured by The Japan Steel Works, Ltd., trade name "N-100"), thereby forming a sheet having a thickness of 2 mm, a length of 120 mm and a width of 120 mm.

### [Evaluation of thermoplastic elastomer composition]

The resultant sheet of the thermoplastic elastomer composition was used to measure a durometer A hardness as an index to flexibility and tensile strength at break and tensile elongation at break as an index to mechanical strength, and conduct an air heat aging test as an index to heat resistance and an immersion test in IRM903 oil as an index to oil resistance in accordance with the following respective methods. The results are shown in Table 1.
(1) Durometer A hardness: Measured in accordance with JIS-K 6253.
(2) Tensile strength at break and tensile elongation at break: Measured in accordance with JIS-K 6251.
(3) Air heat aging test: A sample was aged under conditions that the aging temperature is 150°C, and the aging time is 72 hours, 168 hours, 500 hours and 1,000 hours in accordance with JIS-K 6257, and the tensile strength at break, tensile elongation at break and durometer A hardness of the sample were then measured.
(4) Immersion test: IRM903 oil was used as a lubricating oil for test, and a specimen was immersed under conditions that the immersion temperature is 121°C, and the immersion time is 24 hours in accordance with JIS-K 6258 to measure a rate (ΔV) of volume change.

### <Example 2 and Comparative Examples 1 and 2>

Respective components were charged into a 10-L double arm type pressure kneader (manufactured by MORIYAMA COMPANY LTD.) heated to 230°C in accordance with their corresponding formulation proportions shown in Table 1, and the contents were kneaded (at a shear rate of 200 s⁻¹) for 20 minutes at 40 rpm. The resultant kneaded mass in a molten state was then pelletized by a feeder ruder (manufactured by MORIYAMA COMPANY LTD.) set at 180°C and 40 rpm to obtain kneaded products pelletized. Each of the thus-obtained kneaded products was subjected to a dynamic heat treatment in the same manner as in Example 1, thereby preparing pellets of a dynamically crosslinked thermoplastic elastomer composition.
The pellets of each of the resultant thermoplastic elastomer compositions were injection-molded in the same manner as in Example 1, thereby forming a sheet to evaluate the sheet of the thermoplastic elastomer composition.

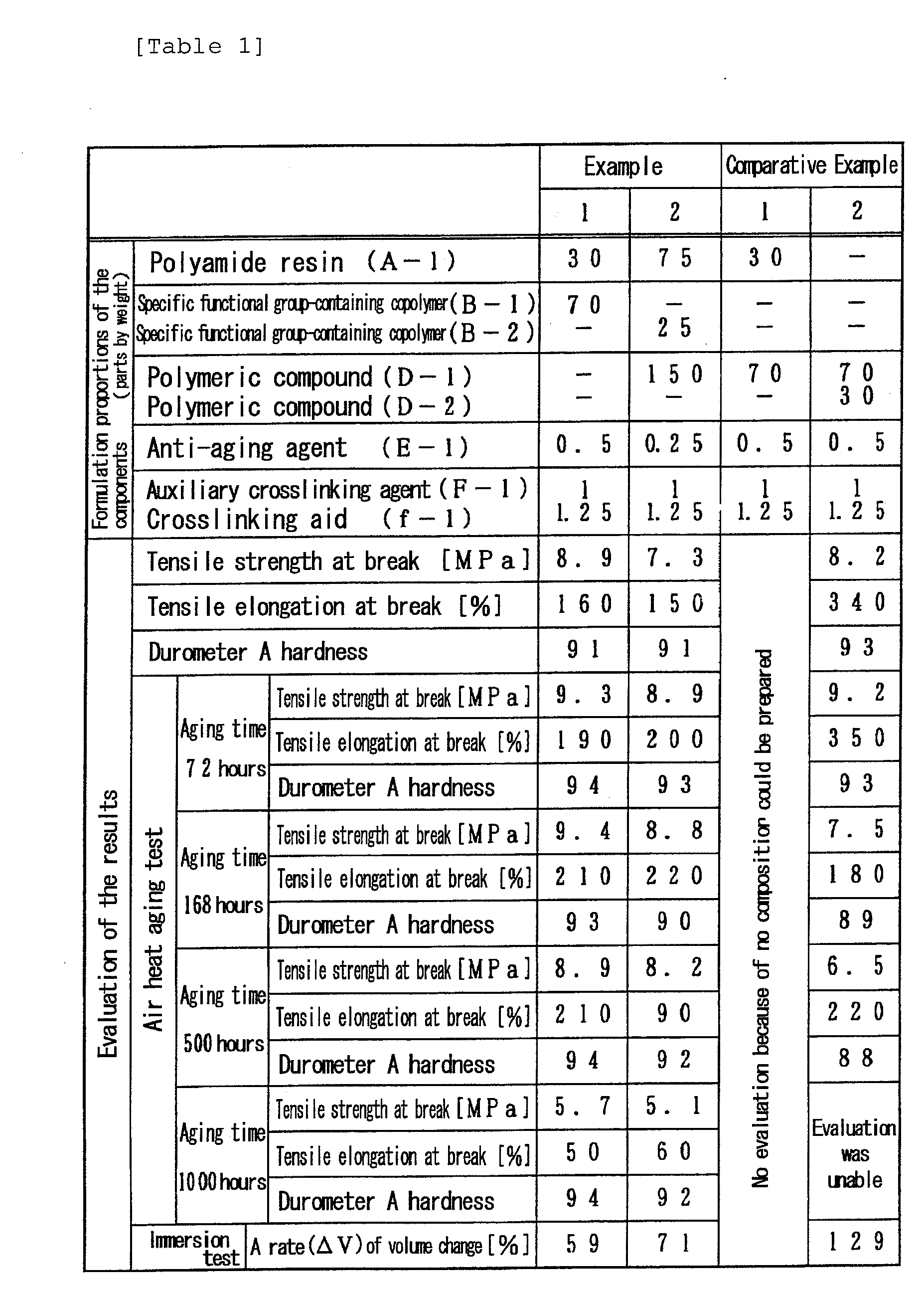

As apparent from the results shown in Table 1, it was confirmed that the thermoplastic elastomer compositions according to Example 1 and Example 2 are excellent in mechanical properties, heat resistance and oil resistance.
On the other hand, in Comparative Example 1, the polyamide resin (A-1) was not compatible with the polymeric compound (D-1), so that it was difficult to prepare a composition.
The composition according to Comparative Example 2 was low in heat resistance and oil resistance.

### INDUSTRIAL APPLICABILITY

Since the thermoplastic elastomer compositions according to the present invention have excellent heat resistance and oil resistance, they are useful as materials for interior or exterior surface materials for automotive bumpers, sheathing moldings, window sealing gaskets, door sealing gaskets, trunk sealing gaskets, roof side rails, emblems, inner panels, door trims, console boxes and the like, weatherstrips and the like, seat cushions for automobiles and motor bicycles, leather seats of which mar resistance is required, sealing materials and interior or exterior surface materials for aircrafts and marine vessels, sealing materials, interior or exterior surface materials, waterproofing sheet materials and the like for civil engineering and construction, sealing materials and the like for general machines and apparatus, packings for capacitors and light electric parts, sealants for water storage tanks, sealing materials, surface materials, housings and the like for fuel cell stacks, rolls and cleaning blades for information instruments, films for electronic parts, protecting films in fabrication processes of semiconductors and flat panel displays (FPDs) such as liquid crystal display devices, sealing materials for electronic parts such as hard disk gaskets, protecting films for images such as photographs, decorative films for building materials, medical instrument parts, covering materials for electric wires, general processed products such as daily needs, caps, various kinds of industrial hoses or tubes and belts and sports goods, and the like.

## Claims

1. A thermoplastic elastomer composition comprising a thermoplastic resin having a polar group and an ethylene·α-olefin elastomer having a functional group.

2. The thermoplastic elastomer composition according to claim 1, wherein the ethylene·α-olefin elastomer having the functional group is a random copolymer obtained by copolymerizing ethylene, an α-olefin having 3 to 10 carbon atoms, an unsaturated monomer having the functional group and an optional non-conjugated diene.

3. The thermoplastic elastomer composition according to claim 2, wherein the functional group in the unsaturated monomer having the functional group is a carboxylic group, hydroxyl group, epoxy group or sulfonic group.

4. The thermoplastic elastomer composition according to claim 2 or 3, wherein the ethylene·α-olefin elastomer having the functional group is a random copolymer obtained by copolymerizing 35 to 94.99 mol% of ethylene, 5 to 50 mol% of the α-olefin having 3 to 10 carbon atoms, 0.01 to 5 mol% of the unsaturated monomer having the functional group and 0 to 10 mol% of the non-conjugated diene.

5. The thermoplastic elastomer composition according to any one of claims 1 to 4, wherein the unsaturated monomer having the functional group is a functional cyclic compound represented by the following general formula (1):
[Chemical Formula 1] 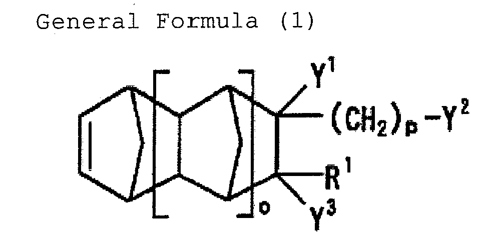 [In the general formula (1), R¹ is a hydrogen atom or a hydrocarbon group having 1 to 10 carbon atoms, Y¹, Y² and Y³ are, independently of one another, a hydrogen atom, a hydrocarbon group having 1 to 10 carbon atoms or -COOH, with the proviso that at least one of Y¹, Y² and Y³ is -COOH, and when at least two of Y¹ , Y² and Y³ are -COOH, they may be bonded to each other to form an acid anhydride (-CO-(O)-CO-), o is an integer of 0 to 2, and p is an integer of 0 to 5.]

6. The thermoplastic elastomer composition according to any one of claims 1 to 4, wherein the thermoplastic resin having the polar group is at least one resin selected from the group consisting of aminoacrylamide polymers, ethylene·vinyl acetate copolymers, polyethylene oxide, ethylene·acrylic acid copolymers, acrylonitrile·butadiene·styrene terpolymers, acrylonitrile·chlorinated polyethylene· ethylene terpolymers, acrylonitrile·styrene copolymers, acrylonitrile·styrene·acrylate resins, acrylic resins, methacrylic resins, polyamide resins, polycarbonate, vinyl alcohol resins, vinyl acetal resins, methyl methacrylate resins, polyether resins, polyester resins and polyacrylates.

7. The thermoplastic elastomer composition according to any one of claims 1 to 6, wherein a proportion of the thermoplastic resin having the polar group to the ethylene·α-olefin elastomer having the functional group is 5:95 to 90:10 in terms of a weight ratio.

8. The thermoplastic elastomer composition according to any one of claims 1 to 7, wherein a softening agent is contained in a proportion of 0 to 200 parts by weight per 100 parts by weight of the total of the thermoplastic resin having the polar group and the ethylene·α-olefin elastomer having the functional group.

9. A process for preparing the thermoplastic elastomer composition according to any one of claims 1 to 8, the process comprising the step of subjecting a thermoplastic resin having a polar group and an ethylene·α-olefin elastomer having a functional group to a dynamic heat treatment in the presence of a crosslinking agent.

10. A molded or formed product formed of the thermoplastic elastomer composition according to any one of claims 1 to 8.
